(19) Europäisches Patentamt
European Patent Office
Office européen des brevets

(11) EP 2 390 271 A1

(12) # EUROPEAN PATENT APPLICATION

(43) Date of publication:
**30.11.2011 Bulletin 2011/48**

(21) Application number: **11158229.2**

(22) Date of filing: **15.03.2011**

(51) Int Cl.:
***C08B 11/155*** *(2006.01)* ***C08B 31/12*** *(2006.01)*
***C08L 29/04*** *(2006.01)* ***C08L 33/12*** *(2006.01)*
***D06M 13/348*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.05.2010 US 787798**

(71) Applicant: **General Electric Company**
**Schenectady, NY 12345 (US)**

(72) Inventors:
- **Tan, Daniel Qi**
  **Niskayuna, NY 12309 (US)**
- **Shafer, Sheldon**
  **Niskayuna, NY 12309 (US)**
- **Khouri, Farid Fouad**
  **Niskayuna, NY 12309 (US)**
- **Irwin, Patricia Chapman**
  **Niskayuna, NY 12309 (US)**
- **Cao, Yang**
  **Niskayuna, NY 12309 (US)**

(74) Representative: **Szary, Anne Catherine**
**GE International Inc.**
**Global Patent Operation - Europe**
**15 John Adam Street**
**London**
**WC2N 6LU (GB)**

(54) **Cyanoresin Polymer for Dielectric Film, Process of Making and Associated Article**

(57) A cyanoresin polymer is described, wherein about 10 percent to about 60 percent of the side chains on the polymer include a cyano group; and substantially all of the remaining polymer side chains include a hydroxyl group. A method of forming such a cyanoresin polymer is described. A capacitor having a dielectric film including such a cyanoresin polymer is also presented.

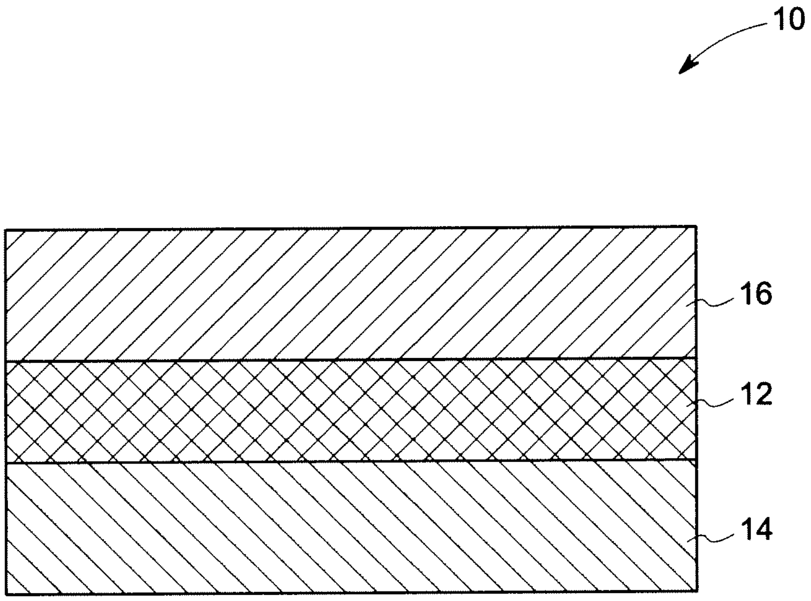


FIG. 1

EP 2 390 271 A1

## Description

### BACKGROUND

The invention relates generally to cyanoresin polymers, and more particularly, to cyanoresin polymers for use as dielectric materials in high energy density capacitors. The invention further relates to a process of making a cyanoresin polymer, and a capacitor comprising a dielectric film of such cyanoresin polymer.

High energy density capacitors have become increasingly important in various industrial, military, and commercial operations. Polymer based capacitors are lightweight and compact and hence, are attractive for various land based and space applications. However, most of the dielectric polymers are characterized by low energy densities (<5 J/cc), and have low breakdown strength (<450 kV/mm), which may limit the operating voltage of the capacitor. In order to achieve relatively high energy density, it may be necessary for the material to exhibit both high dielectric constant characteristics, and high breakdown strength characteristics. A "trade-off" between these two properties may not be advantageous in some circumstances.

Most of the dielectric polymers that exhibit high breakdown strength have a low dielectric constant. Typically, high dielectric-constant ceramic fillers are used to increase the dielectric constant of the polymer. Further increases in the dielectric constant of the polymer can be achieved by including a high concentration of the ceramic filler. For example, a polymer-ceramic composite with a dielectric constant equal to 150 can have a ceramic filler loading density as high as 85% by volume, which is about 98% by weight. However, a high concentration of the ceramic filler not only decreases the mechanical flexibility of the composite, but also introduces interfacial defects and thus, lowers the breakdown strength of the composites.

The cyanoresin family of polymers is usually characterized by high dielectric constants ($\in > 15$), and the materials are commercially available as film forming resins. Commercial-grade, high dielectric-constant cyanoresins have been available and widely used as coating materials for electroluminescent lamps. Pure cyanoresin films such as CR-C (cyanoethyl cellulose), CR-S (cyanoethyl pullulan) and CR-E (cyanoethyl hydroxyethyl cellulose) are reported to be highly brittle. Hence, they are conventionally used only as blends with other polymers. However, the blended materials can exhibit other drawbacks, e.g., low dielectric constant values; low energy density, and a very high dissipation loss.

The cyanoresins have been studied and processed for high quality films with high breakdown strength. However, an additional drawback for these materials in some situations is that they lack enough mechanical strength to be processed into freestanding films for capacitor fabrication. Usually, the film cracks, due to embrittlement of the material.

With the understanding that the beneficial properties of some of the cyanoresins is quite significant, there is a desire to improve some of the other properties which may be deficient, so as to meet the performance requirements of high energy density capacitors. It is also desirable to have a cyanoresin film having good electrical properties and good mechanical properties, as compared to some of the existing dielectric films.

### BRIEF DESCRIPTION

Some embodiments provide a cyanoresin polymer wherein about 10 percent to about 60 percent of the side chains on the polymer include a cyano group, and substantially all of the remaining polymer side chains comprise a hydroxyl group.

Some other embodiments provide a process of making a cyanoresin polymer having about 10 percent to about 60 percent of the side chains on the polymer including a cyano group, with substantially all of the remaining polymer side chains including a hydroxyl group. The process includes the steps of providing a base polymer and reacting the base polymer with an olefin including a cyano group. The base polymer includes at least one side chain containing a hydroxyl group.

According to some embodiments of the invention, an article comprises a dielectric film including a cyanoresin polymer. The cyanoresin polymer comprises about 10 percent to about 60 percent of the side chains including a cyano group, and substantially all of the remaining polymer side chains including a hydroxyl group.

According to some embodiments of the invention, a capacitor is provided. The capacitor includes a dielectric film and at least one electrode coupled to the dielectric film. The dielectric film includes a cyanoresin polymer, which includes side chain wherein about 10 percent to about 60 percent of the side chains include a cyano group, and substantially all of the remaining polymer side chains include a hydroxyl group.

### DRAWINGS

These and other features, aspects, and advantages of the present invention will become better understood when the following detailed description is read with reference to the accompanying drawing, wherein:

FIG. 1 illustrates a capacitor, according to one embodiment of the invention.

DETAILED DESCRIPTION

Approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

In the following specification and claims, the singular forms "a", "an" and "the" include plural referents unless the context clearly dictates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur — this distinction is captured by the terms "may" and "may be".

Some of the dielectric properties considered herein are the dielectric constant, dissipation factor, the dielectric breakdown voltage or dielectric breakdown strength, and the energy density. The "dielectric constant" of a dielectric material is a ratio of the capacitance of a capacitor, in which the space between and around the electrodes is filled with the dielectric material, to the capacitance of the same configuration of electrodes in a vacuum. As used herein, the term "dissipation factor" or "dielectric loss" refers to ratio of the power dissipated in a dielectric material to the power applied. The dissipation factor is usually measured as the tangent of the loss angle (δ), or the cotangent of the phase angle.

As used herein, "dielectric breakdown strength" refers to a measure of the dielectric breakdown resistance of a dielectric material under an applied AC or DC voltage. The applied voltage prior to breakdown is divided by the thickness of the dielectric (e.g., polymer) material, to provide the breakdown strength value or breakdown voltage. It is generally measured in units of potential difference over units of length, such as kilovolts per millimeter (kV/mm).

The energy of a capacitor is generally calculated by the equation $E=(1/2)\,CV^2$, where C is the capacitance in farads (F), and V is the working voltage of the capacitor in volts (V). These relationships may also be expressed as a function of the electric field, E. If the dielectric constant K of the material does not change with the applied electric field E (in V/um), the electric energy density $U_E$ (in J/cc) stored in a capacitor can be calculated by

$$U_E=1/2\in_0 K\,E^2,$$

where $\in_0$ is the permittivity of vacuum. The highest electric field that can be applied to a material is called its dielectric breakdown strength. As used herein, the term "high temperatures" refers to temperatures above about 100 degrees Celsius (°C), unless otherwise indicated.

Some of the mechanical and thermo-mechanical properties considered herein are ductility, and softening temperature. Ductility is a mechanical property used to describe the ability of a material to plastically deform without breaking or fracturing. The ductility of the material is often characterized by the ability to deform under tensile stress, for example, in forming a wire or a thin sheet.

The cyanoresin polymers described herein, having a partial crystallization structure, are generally characterized using a softening temperature measurement, rather than a glass-transition temperature measurement. As used herein, the "softening temperature" for a cyanoresin polymer refers to a maximum temperature at which the cyanoresin polymer can be utilized without substantial degradation or softening.

Typically, many of the cyanoresin films sometimes have poor mechanical properties. However, mechanical properties such as ductility, and mechanical stability at high operational temperatures, are usually required for forming flexible and high quality films. Many of the currently available cyanoresins or blends of cyanoresins have good electrical properties, but lack acceptable thermo-mechanical properties. Both types of properties are often necessary.

According to one embodiment of the invention, a cyanoresin polymer is provided. The cyanoresin polymer contains about 10 percent to about 60 percent of side chains, which include a cyano group, and substantially all of the remaining polymer side chains include a hydroxyl group. In certain embodiments, about 10 percent to about 35 percent of the side chains of the polymer include the cyano group, and substantially all of the remaining polymer side chains include a hydroxyl group. In other embodiments, the side chains can include a biscyano group. Desirable properties may be optimized by tailoring the substitution of cyano groups in the various side chains.

Some embodiments are directed to a process of making a cyanoresin polymer. The process includes the steps of providing a base polymer, and reacting the base polymer with an olefin which includes a cyano group. The chemical reaction results in a cyanoresin polymer, as described above.

The base polymer is a polymer having at least one side chain that includes a hydroxyl group. In one embodiment, the base polymer is a polymer having substantially all side chains including hydroxyl groups. Suitable examples for base polymers may include cellulose, pullulan, polyhydroxyethyl methacrylate, and polyvinylalcohol. In one exemplary embodiment, the base polymer includes a cellulosic material. In another embodiment, the base polymer includes a pullulan.

An olefin is an unsaturated hydrocarbon containing one or more pairs of carbon atoms linked by a double bond (C = C). As used herein, the term olefin refers to an aromatic compound that includes a cyano group. Suitable examples of such olefins may include acrylonitrile compounds. The chemical formula for acrylonitrile is $C_3H_3N$. The term acrylonitrile, as used herein, encompasses acrylonitrile monomers, cyanoethylene, propenenitrile, pentenenitrile, cinnamonitrile, vinyl cyanide or combinations thereof. In one embodiment, the following acrylonitrile monomers are the preferred olefins: 1,1 - dicyano ethylene, 1,2 - dicyano ethylene, and 4-pentenenitrile.

As discussed above, one process for making these materials includes the step of reacting the base polymer with the olefin, to form the cyanoresin polymer. A hydroxyl group of the base polymer reacts with the olefin that contains a cyano group, resulting in a cyano-containing side chain. In some embodiments, about 10 percent to about 60 percent of the hydroxyl groups of the base polymer react with the olefin, such that about 10 percent to about 60 percent of the side chains include cyano groups. Substantially all of the remaining polymer side chains include a hydroxyl group. In certain embodiments, about 10 percent to about 35 percent hydroxyl groups of the base polymer react with the olefin, such that about 10 percent to about 35 percent of the side chains include cyano groups, with substantially all of the remaining polymer side chains including a hydroxyl group.

According to some embodiments of the invention, the reaction step includes cyanoalkylation of the base polymer with the olefin. The term "cyanoalkylation" refers to a chemical reaction involving the addition of a cyanoalkene compound such as acrylonitrile to compounds containing a reactive hydrogen. For example, cyanoalkylation of cellulose is given below:

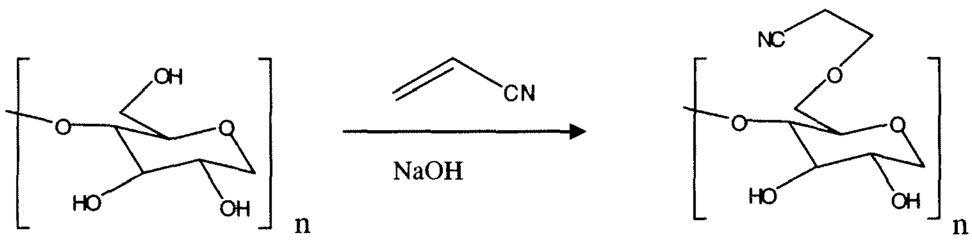


The cyanoresin polymer may have an aliphatic, aromatic or aryloxy backbone, depending on the choice of the base polymer. The molecular weight of the cyanoresin polymers may be in a range from about 10,000 to about 5,000,000. Cyano side chains of cyanoresin polymers are, usually, highly polar, imparting cyanoresin polymers with a high dielectric constant. In particular, the cyano (CN) group has a substantially high dipole moment, and a substantially high mobility, allowing the molecule to re-orient under an electric field. This may, in turn, lead to high dielectric constant values in the cyanoresin polymers. In some embodiments, cyanoresin polymers have a dielectric constant greater than about 10, at 20 degrees Celsius and 1 kHz. In certain embodiments, the cyanoresin polymer has a dielectric constant greater than about 13, at 20 degrees Celsius and 1 kHz. Moreover, the dissipation factor of the cyanoresin polymers described herein is less than about 0.01, in some embodiments.

The high softening temperature of a cyanoresin polymer provides strength and thermo-mechanical stability at high operating temperatures. The cyanoresin polymer, in accordance with some embodiments of the invention, preferably has a softening temperature greater than about 200 degrees Celsius. In one embodiment, the cyanoresin polymer has a softening temperature greater than about 220 degrees Celsius. In yet another embodiment, the cyanoresin polymer has a softening temperature greater than about 250 degrees Celsius.

Some embodiments of the invention provide an article. The article includes a dielectric film formed from a cyanoresin polymer, or a material comprising the polymer. The dielectric film may also be referred as "cyanoresin dielectric film". The cyanoresin polymer contains about 10 percent to about 60 percent of side chains, which include a cyano group, wherein substantially all of the remaining polymer side chains include a hydroxyl group.

In certain embodiments, the cyanoresin dielectric film has a thickness in a range from about 0.05 micron to about 20 microns. In a particular embodiment, the dielectric film has a thickness in a range from about 0.1 micron to about 10 microns. As will be discussed in detail below, the dielectric breakdown strength of the dielectric film was found to be inversely proportional to the film thickness. Accordingly, the selected thickness of the dielectric film is, in part, dependent on the required energy density, and the processing feasibility. In certain embodiments, the dielectric films may have higher film thicknesses, for example, in a range from about 1 micron to about 50 microns.

The amount of cyano side chains in the cyanoresin polymer may be optimized to improve the mechanical

strength, such as the tensile strength of cyanoresin polymers for film formation, and to maintain their dielectric properties. The tensile strength of the dielectric film is a measure of the flexibility and ductility of the dielectric film. In one embodiment, the dielectric film may have a tensile strength of greater than about 5,000 psi. In another embodiment, the dielectric film has a tensile strength greater than about 9000 psi.

The dielectric breakdown strength of the dielectric film may be, in part, controlled by the film composition, film thickness, and the quality of the film, which is usually defined by surface defects, film deposition, and surface chemical modification. Typically, for general embodiments of the invention, the dielectric film has a breakdown strength of at least about 200 kV/mm. In one embodiment, the dielectric film has a breakdown strength in a range from about 200 kV/mm to about 1000 kV/mm. In some preferred embodiments, the dielectric film has a breakdown strength in a range from about 300 kV/mm to about 700 kV/mm.

Thinner dielectric films usually exhibit higher breakdown strength values, and the breakdown strength of the dielectric film can be improved by reducing the thickness of the film. The cyanoresin dielectric films, having good mechanical strength, can be processed into freestanding films, even of reduced thickness.

Some embodiments of the present invention provide a capacitor, including a dielectric film and at least one electrode coupled to the dielectric film. FIG. 1 provides a simplified illustration of a capacitor 10, having a dielectric film 12 deposited on a substrate 14. The dielectric film 12 includes a cyanoresin polymer, of the types described previously. An electrode 16 is coupled to the dielectric film 12. Usually, the electrode 16 includes a layer of a conducting polymer or a metal. Commonly used metals include aluminum, stainless steel, titanium, zinc and copper. The electrode layer is typically thin, on the order of from about 50 Å to about 500 Å. In some embodiments, the capacitor may be a multilayer capacitor. In such embodiments, a number of dielectric films and electrode layers can be alternately arranged to form a multilayer capacitor.

Substantially high dielectric constant values, and high breakdown strength values for dielectric films, facilitate high-energy density for capacitors. In one embodiment, the energy density of the capacitor is at least about 5 J/cubic centimeters. In another embodiment, the energy density of the capacitor is at least about 10 J/cc. In yet another embodiment, the energy density of the capacitor is at least about 20 J/cc.

The capacitor may optionally include a capping layer disposed on the dielectric film. Examples of suitable capping layer materials include, but are not limited to, polycarbonate, cellulose acetate, polyetherimide, fluoropolymers, parylene, acrylate, silicon oxide, silicon nitride, and polyvinylidene fluoride. For particular embodiments, the capping layer has a thickness of less than about 10% of the thickness of the dielectric film. The capping layer may help in filling in or otherwise mitigating surface defects and hence, may improve the breakdown strength of the film. It should also be emphasized that the present invention is not limited to any particular type of capacitor, as long as the features described herein are present.

In some embodiments, filler particles are dispersed in the cyanoresin matrix. The filler particles may contribute positively towards the dielectric constant of the film, and hence may be advantageously utilized. These filler particles have been found to increase the dielectric constant and hence, the energy storage capacity, while maintaining all other high performance parameters, such as high resistivity, low dissipation factor, and high breakdown voltage. Such filler particles and their effect on dielectric properties of a polymer are described in a patent application (Publication No. US 20070117913A1) entitled "Antiferroelectric Polymer Composites, Methods of Manufacture Thereof, And Articles Comprising the Same" filed on November 23, 2005, which is incorporated herein by reference.

Furthermore, in some embodiments, a toughening material may be added to the cyanoresin polymer. The toughening material may be an additive material, which increases mechanical strength of a base material (the cyanoresin) by at least about 5%. Such toughening materials and their effect on dielectric properties of a polymer are described in an earlier patent application, US Application Number 12/570761, entitled "Dielectric Film, Associated Article and Method" filed on September 30, 2009, and incorporated herein by reference.

Cyanoresin polymers may be dissolved in any suitable solvent to prepare a solution. The solution may be applied to a substrate by any suitable process known in the art. In some particular embodiments, the solvent is selected from the group consisting of acetone, acetonitrile, cyclohexanone, furfuryl alcohol, tetrahydrofurfuryl alcohol, methyl acetoacetate, nitromethane, N,N-dimethylformamide (DMF), N-methyl-2-pyrrolidone (NMP), butyrolactone, propylene carbonate, and various combinations of these. In an exemplary embodiment, the solvent comprises N,N-dimethylformamide.

Examples of suitable coating processes include, but are not limited to, tape-casting, dip coating, spin coating, chemical vapor deposition, melt extrusion, and physical vapor deposition, such as sputtering. Typically, the dielectric film has a thickness of less than about 5 microns. In one preferred embodiment, the film may be applied by a tape-casting process. When the film thickness is substantially small, solution based coating techniques such as spin coating or dip coating may be used. In an exemplary embodiment, the film may be preferably applied by a spin coating process.

The cyanoresin dielectric film may be improved by controlling the deposition conditions. For example, by performing the coating processes in a clean room environment, high quality thin films may be obtained. The cyanoresin films processed by the above processes showed unexpectedly high breakdown strength. In one embodiment, the cyanoresin dielectric film has a breakdown strength of at least about 300 kV/mm. In a particular embodiment, the cyanoresin dielectric film has a breakdown strength in a range from about 300 kV/mm to about 1000 kV/mm.

EXAMPLES

The following examples are presented to further illustrate certain embodiments of the present invention. These examples should not be read to limit the invention in any way.

Comparative Example

Most of the commercially available and typically known cyanoethyl cellulose-based materials, such as CR-C and CR-S, are generally produced by cyanoalkylation of cellulose with acrylonitrile at a level greater than about 80 percent. Dielectric properties and softening temperature of CR-C and CR-S are provided in Table 1, below.

Example 1

39.8 grams of about 50 percent aqueous sodium hydroxide solution was added into approximately 160 milliliters of de-ionized water in a 500 milliliter, three-neck flask equipped with a mechanical stirrer, a metering addition funnel, and a thermocouple probe. The flask was immersed in an ice water bath, and the internal temperature was controlled between about 3 degrees Celsius and about 7 degrees Celsius. 40 grams of Cellulose powder (Aldrich 435236) was rinsed in the flask with 10 milliliters de-ionized water. 64.8 grams (1.22 moles) of acrylonitrile was then slowly dripped into the stirred reaction flask over a period of about 1.25 hours, maintaining the above internal temperature, to prepare a mixture. The mixture was then stirred for about 3 hours, maintaining the internal temperature below about 10 degrees Celsius. The reaction was then terminated with the addition of another mixture of 30 grams glacial acetic acid and 120 millliliters de-ionized water. This addition was done over a period of about 45 minutes. The reaction mixture was then poured into plastic jars and centrifuged to separate the solid from the liquid. The liquid was decanted from the solid, and the solid was washed with de-ionized water. The solid was filtered from the wash liquid and then placed in a vacuum oven, vacuum of 25 inches of mercury, at about 85 degrees Celsius, for about 18 hours. The resulting recovered polymer (about 48 grams) was subjected to Carbon-13 NMR in DMSO to measure the level of cyanoethylation. The Carbon-13 NMR indicated conversion of the hydroxyl groups to cyanoethyl ethers at 49 percent.

Example 2

20 grams of about 50 percent aqueous sodium hydroxide solution was added to approximately 80 milliliters of de-ionized water in a 500 milliliter three neck flask equipped with a mechanical stirrer, a metering addition funnel, and a thermocouple probe. The flask was immersed in an ice water bath and the internal temperature was controlled between about 3 degrees Celsius and about 7 degrees Celsius. 20 grams of Cellulose powder (Aldrich 435236) was rinsed into the flask with 10 milliliters de-ionized water. 15.72 (0.296 moles) grams (moles) of acrylonitrile was then slowly dripped into the stirred reaction flask over a period of about 1 hour, maintaining the above internal temperature, to prepare a mixture. The mixture was then stirred for about 3 hours, maintaining the internal temperature below about 10 degrees Celsius. A resulting polymer was recovered from the mixture as described above in example 1. The resulting recovered polymer (about 22.1 grams) was subjected to Carbon-13 NMR in DMSO to measure the level of cyanoethylation. The Carbon-13 NMR indicated conversion of the hydroxyl groups of Cellulose to cyanoethyl ethers at about 30 percent.

All of the above prepared cyanoresin polymers were characterized to determine their dielectric constants, dissipation factors, and softening temperatures. Table 1 shows such results of two cyanoresin polymers as described in example 1 and example 2, along with comparative examples. As compared to comparative examples, examples 1 and 2 show lower dissipation factors (about 10 times lower), and higher softening temperatures, and have a good balance of electrical and thermo-mechanical properties.

Table 1

| Cyanoresin Polymer | | Dielectric Constant at 1kHz | Dissipation Factor ($\tan\delta$) | Operation ("Softening") Temperature |
|---|---|---|---|---|
| Comparative Example | CR-C | 16.3 | 0.15 | > 200 |
| | CR-S | 18.6 | 0.13 | ~ 105 |
| Example 1 | | 15 | <0.01 | > 200 |
| Example 2 | | 13 | <0.01 | > 200 |

While only certain features of the invention have been illustrated and described herein, many modifications and changes will occur to those skilled in the art. It is, therefore, to be understood that the appended claims are intended to cover all such modifications and changes as fall within the true scope of the invention.

## Claims

1. A cyanoresin polymer, wherein about 10 percent to about 60 percent of the side chains on the polymer comprise a cyano group; and substantially all of the remaining polymer side chains comprise a hydroxyl group.

2. The cyanoresin polymer of claim 1, wherein about 10 percent to about 35 percent of the polymer side chains comprise the cyano group.

3. The cyanoresin polymer of claim 1 or claim 2, **characterized by** a dielectric constant of greater than about 10, at 1kHz.

4. The cyanoresin polymer of claim 3, **characterized by** a dielectric constant of greater than about 13, at 1kHz.

5. The cyanoresin polymer of any preceding claim, wherein the dissipation factor of the cyanoresin polymer is less than about 0.01.

6. The cyanoresin polymer of any preceding claim, having a softening temperature greater than about 200 degrees Celsius.

7. A process of making a cyanoresin polymer, comprising:

   providing a base polymer having at least one side chain comprising a hydroxyl group, and
   reacting the base polymer with an olefin comprising a cyano group to form the cyanoresin polymer,
   wherein about 10 percent to about 60 percent of the side chains of the polymer comprise a cyano group; and substantially all of the remaining polymer side chains comprise a hydroxyl group.

8. The process of claim 7. wherein the base polymer comprises a polymer selected from the group consisting of cellulose, pullulan, polyhydroxyethyl methacylate and polyvinylalchol.

9. The process of claim 7 or claim 8, wherein the reaction step comprises cyanoalkylation of the base polymer with the olefin.

10. The process of any one of claims 7 to 9, wherein the olefin is selected from the group consisting of acrylonitrile, 1,1 - dicyano ethylene, 1,2 - dicyano ethylene, 4-pentene nitrile; cinnamonitrile; and combinations thereof.

11. An article, comprising:

    a dielectric film comprising a cyanoresin polymer, wherein the cyanoresin polymer comprises about 10 percent to about 60 percent of side chains comprising a cyano group, and wherein the remaining side chains comprise a hydroxyl group.

12. The article of claim 11, wherein the dielectric film has a thickness in a range from about 0.05 micron to about 20 microns.

13. The article of claim 12, wherein the dielectric film has a thickness in a range from about 0.1 micron to about 10 microns.

14. A capacitor, comprising:

    a dielectric film comprising a cyanoresin polymer which includes side chains, and
    at least one electrode coupled to the dielectric film,
    wherein about 10 percent to about 60 percent of the side chains on the cyanoresin polymer comprise a cyano group; and substantially all of the remaining polymer side chains comprise a hydroxyl group.

15. The capacitor of claim 14, having an energy density of at least about 5 J/cc.

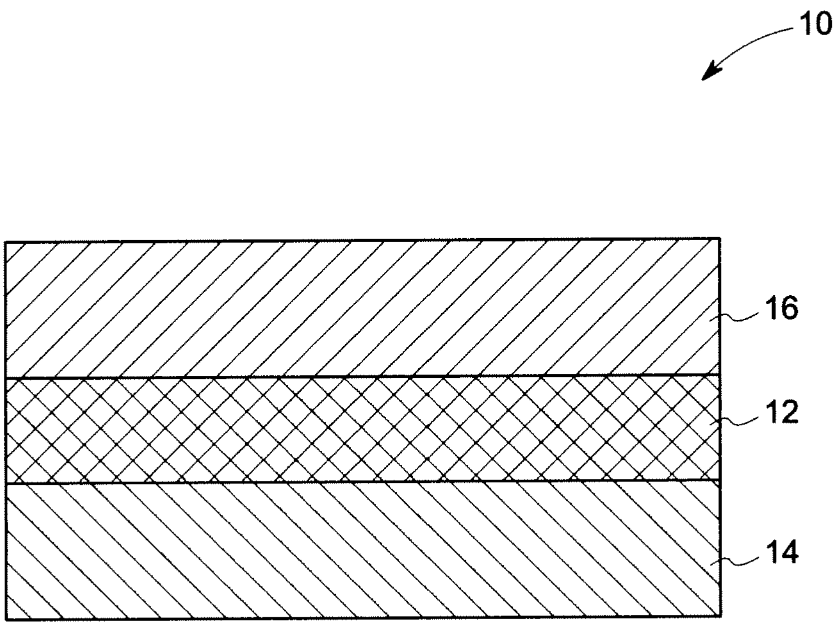


FIG. 1

Europäisches Patentamt
European Patent Office
Office européen des brevets

# EUROPEAN SEARCH REPORT

Application Number
EP 11 15 8229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nakayama: "Substituent distribution of cyanoethyl cellulose", Cellulose, vol. 5 1 January 1998 (1998-01-01), pages 175-185, XP002660779, Retrieved from the Internet: URL:http://www.springerlink.com/content/p24727k827034837/fulltext.pdf [retrieved on 2011-10-07] * table 1 * ----- | 1-10 | INV. C08B11/155 C08B31/12 C08L29/04 C08L33/12 D06M13/348 |
| X | US 2 375 847 A (CLYDE HOUTZ RAY) 15 May 1945 (1945-05-15) * examples 9,10 * ----- | 1-10 | |
| X | DE 11 96 628 B (KREMPEL AUGUST SOEHNE) 15 July 1965 (1965-07-15) * examples 3,4 * ----- | 1-10 | |
| X | US 3 525 735 A (MILLER IVAN KEITH) 25 August 1970 (1970-08-25) * examples 1,5 * ----- | 1-10 | TECHNICAL FIELDS SEARCHED (IPC) |
| X | US 2 994 634 A (JAYNE JACK E) 1 August 1961 (1961-08-01) * examples 1-8, 10 * ----- | 1-10 | C08B C08L D06M |

The present search report has been drawn up for all claims

1

| Place of search | Date of completion of the search | Examiner |
|---|---|---|
| Munich | 7 October 2011 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number

EP 11 15 8229

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

# LACK OF UNITY OF INVENTION SHEET B

Application Number
EP 11 15 8229

The Search Division considers that the present European patent application does not comply with the requirements of unity of invention and relates to several inventions or groups of inventions, namely:

1. claims: 1-10(partially)

Cellulose substituted at 10% to 60% with cyano groups

---

2. claims: 1-10(partially)

Pullulan substituted at 10% to 60% with cyano groups

---

3. claims: 1-10(partially)

Polyhydroxyethyl methacrylate substituted at 10% to 60% with cyano groups

---

4. claims: 1-10(partially)

Polyvinylalcohol substituted at 10% to 60% with cyano groups

---

5. claims: 1-10(partially)

Process of making a cyanoresin polymer substituted at 10% to 60% with cyano groups comprising cyanoalkylation with acrylonitrile.

---

6. claims: 1-10(partially)

Process of making a cyanoresin polymer substituted at 10% to 60% with cyano groups comprising cyanoalkylation with 1,1-dicyano ethylene

---

7. claims: 1-10(partially)

Process of making a cyanoresin polymer substituted at 10% to 60% with cyano groups comprising cyanoalkylation with 4-pentene nitrile

---

8. claims: 1-10(partially)

Process of making a cyanoresin polymer substituted at 10% to 60% with cyano groups comprising cyanoalkylation with cinnamonitrile

---

9. claims: 11-13

Europäisches Patentamt
European Patent Office
Office européen des brevets

## LACK OF UNITY OF INVENTION SHEET B

Application Number
EP 11 15 8229

The Search Division considers that the present European patent application does not comply with the requirements of unity of invention and relates to several inventions or groups of inventions, namely:

Dielectric films comprising a cyanoresin polymer substituted at 10% to 60% with cyano groups.

---

10. claim: 14

Capacitors comprising dielectric films comprising a cyanoresin polymer substituted at 10% to 60% with cyano groups.

---

## ANNEX TO THE EUROPEAN SEARCH REPORT ON EUROPEAN PATENT APPLICATION NO. EP 11 15 8229

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2011

| Patent document cited in search report | | Publication date | Patent family member(s) | Publication date |
|---|---|---|---|---|
| US 2375847 | A | 15-05-1945 | NONE | |
| DE 1196628 | B | 15-07-1965 | NONE | |
| US 3525735 | A | 25-08-1970 | BE 613355 A1 | 31-07-1962 |
| US 2994634 | A | 01-08-1961 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070117913 A1
- US 12570761 B